Europäisches Patentamt

European Patent Office

Office européen des brevets

(11) Veröffentlichungsnummer: **0 336 160**
**A2**

(12) **EUROPÄISCHE PATENTANMELDUNG**

(21) Anmeldenummer: 89104658.3

(51) Int. Cl.⁴: **B60G 15/02**

(22) Anmeldetag: 16.03.89

(30) Priorität: 07.04.88 DE 3811630

(43) Veröffentlichungstag der Anmeldung:
11.10.89 Patentblatt 89/41

(84) Benannte Vertragsstaaten:
AT CH DE FR GB IT LI NL SE

(71) Anmelder: **MAN NUTZFAHRZEUGE
AKTIENGESELLSCHAFT**
**Dachauer Strasse 667 Postfach 50 06 20**
**D-8000 München 50(DE)**

(72) Erfinder: **Rieck, Gerhard, Dipl.-Ing.**
**Fasanenstrasse 30**
**D-8000 München 60(DE)**
Erfinder: **Scholly, Ingo, Dipl.-Ing.(FH)**
**Döllingerstrasse 39**
**D-8000 München 50(DE)**
Erfinder: **Mertens, Armin**
**Riesstrasse 74**
**D-8000 München 50(DE)**

(54) Achsanlenkung bei Nutzfahrzeugen.

(57)

Technische Aufgabe

Erhöhung der Achslast ohne Vergrößerung des Einbauraumes der Hauptfeder und Beibehaltung des Fahrverhaltens bei Leerfahrt.

Es sind eine Feder (4) und ein Stoßdämpfer (5) entlang einer gemeinsamen Längsachse (7) in einem gemeinsamen Gehäuse (8), eine Feder-Stoßdämpfer-Einheit (6) bildend, angeordnet. Diese Feder-Stoßdämpfer-Einheit (6) kann allein oder in Kombination mit weiteren Federn oder Stoßdämpfern zur Abstützung der Achse (2) am Fahrzeugrahmen (1) eingesetzt werden.

Fig. 1

## Achsanlenkung an Nutzfahrzeugen

Die Erfindung bezieht sich auf eine Achslenkung mit auf eine Achse einwirkenden Federn und Stoßdämpfern, die zwischen dem Fahrzeugrahmen und einer Achse von Nutzfahrzeugen angeordnet sind.

Der Erfindung liegt die Aufgabe zugrunde, Achslasterhöhungen bei Nutzfahrzeugen unter Beibehaltung des Einbauraumes der Hauptfeder und ohne Verschlechterung des Fahrverhaltens bei Leerfahrt vornehmen zu können oder mit einer Grundfederung verschiedener Beanspruchung der Federung, je nach dem, ob es sich um ein Straßen- oder Geländefahrzeug handelt, abfangen zu können.

Dies wird erfindungsgemäß dadurch erreicht, daß eine Feder und ein Stoßdämpfer entlang einer gemeinsamen Längsachse in einem gemeinsamen Gehäuse, eine Feder-Stoßdämpfer-Einheit bildend, angeordnet sind und diese Feder-Stoßdämpfer-Einheit allein oder in Kombination mit weiteren Federn oder Stoßdämpfern zur Abstützung der Achse am Fahrzeugrahmen vorgesehen ist. Solcherart werden sehr aufwendige Um- und Neukonstruktionen vermieden, die die erforderlichen Platzverhältnisse mit zulässigen Federwegen für weitere Schraubenfedern schaffen müßten. Es ist also von großem Vorteil, die aufgabengemäß geforderten Achslasterhöhungen bei gleichzeitig gutem Leerfahrtverhalten mittels der erfindungsgemäßen Feder-Stoßdämpfer-Einheit in bestehenden Einbauräumen realisieren zu können. Der Vorteil der im Stoßdämpfer integrierten Feder bewirkt weiterhin, daß diese bei den geforderten großen Federwegen und extremen Achsverschränkungen nicht ausknicken kann.

Hinsichtlich der Kombination der Feder-Dämpfer-Einheit mit weiteren Dämpfern oder Federn ergeben sich vielfache Ausgestaltungsmöglichkeiten. So können z.B., um keine Momente auf die Achsführung zu bringen, beidseitig der Feder-Stoßdämpfer-Einheit je eine weitere Feder angebracht werden. Soll keine weitere Feder zum Einsatz kommen, so kann bei entsprechender Dimensionierung die Achslast auch allein von der Feder-Stoßdämpfer-Einheit übernommen werden.

Weitere Merkmale und Vorteile der Erfindung sind den Ansprüchen, den Zeichnungen und der Figurenbeschreibung zu entnehmen.

Die Erfindung ist in mehreren Ausführungs- und Anwendungsbeispielen dargestellt und beschrieben.

Es zeigen: jeweils zwischen Fahrzeugrahmen und Achsbrücke oder Blattfeder eingespannt

Fig. 1 eine Feder-Stoßdämpfer-Einheit in Kombination mit einer Schraubenfeder,

Fig. 2 zwei Feder-Stoßdämpfer-Einheiten in Kombination mit einer Schraubenfeder,

Fig. 3 zwei Feder-Stoßdämpfer-Einheiten,

Fig. 4 zwei Feder-Stoßdämpfer-Einheiten in Kombination mit einer Gummi-Hohlfeder,

Fig. 5 eine Feder-Stoßdämpfer-Einheit in Wirkverbindung mit einer die Achse tragenden Blattfeder, sowie

Fig. 6 die Federkennlinie einer Feder-Stoßdämpfer-Einheit.

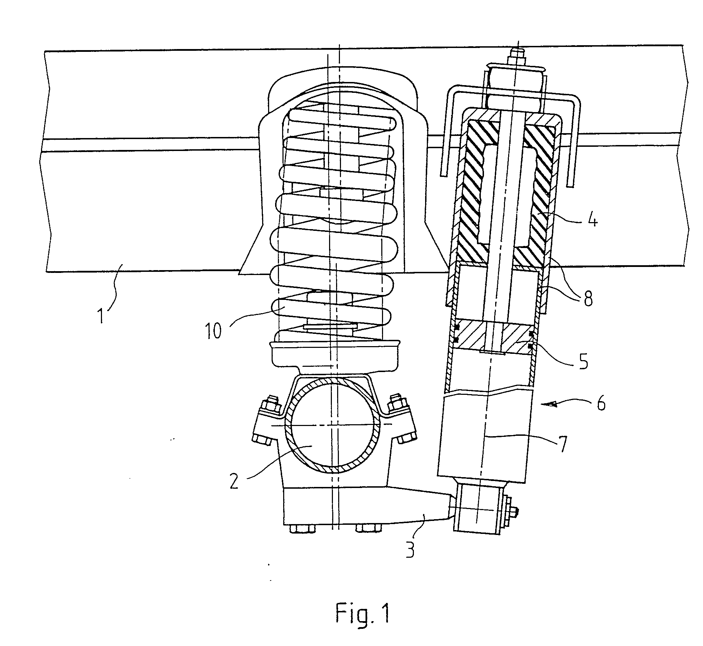

Nach Fig. 1 ist zwischen dem Fahrzeugrahmen 1 und der die Achse 2 tragenden Achsbrücke 3 eine Schraubenfeder 10 und eine Feder-Stoßdämpfer-Einheit 6 eingespannt. Die Feder-Stoßdämpfer-Einheit 6 umfaßt ein zweiteiliges Gehäuse 8, in dem entlang einer gemeinsamen Längsachse 7 eine Feder 4 und ein Stoßdämpfer 5, hintereinandergeschaltet, angeordnet sind.

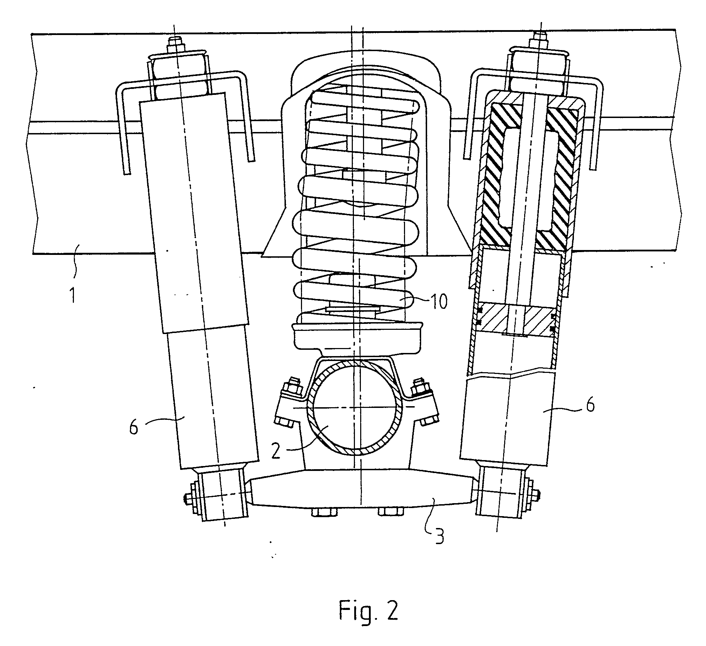

Fig. 2 zeigt eine mittig zur Achsbrücke angordnete Schraubenfeder 10 und je eine zu beiden Seiten der Schraubenfeder angebrachte Feder-Stoßdämpfer-Einheit 6.

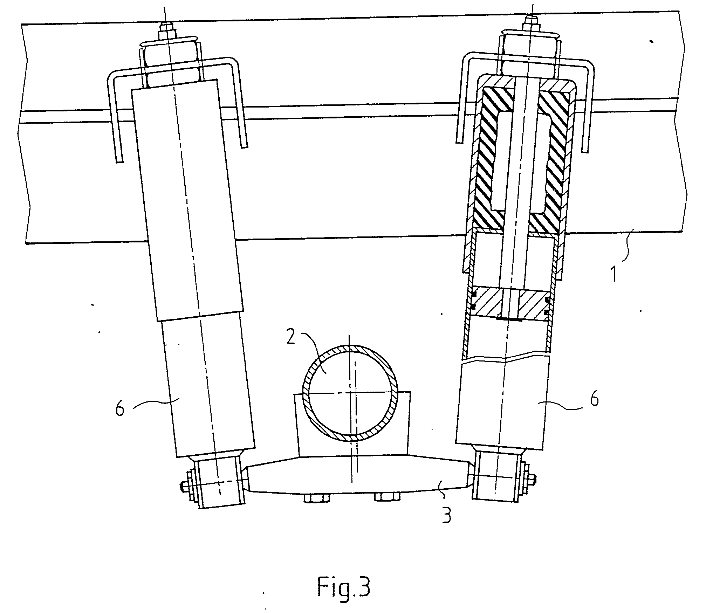

Fig. 3 zeigt die Anordnung von zwei zwischen Fahrzeugrahmen 1 und Achsbrücke 3 eingespannten Feder-Stoßdämpfer-Einheiten, die mit gleichem Abstand zur Achse 2 angeordnet sind.

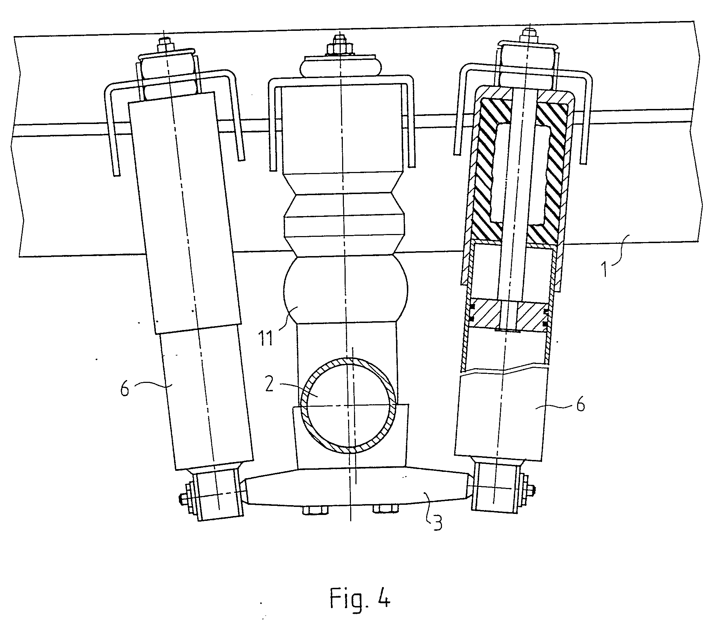

Nach Fig. 4 ist mittig zur Achse 2 zwischen Fahrzeugrahmen 1 und Achsbrücke 3 eine Gummi-Hohlfeder 11 eingespannt, und dieser ist beidseitig mit gleichem Abstand zur Achsmitte je eine Feder-Stoßdämpfer-Einheit 6 zugeordnet.

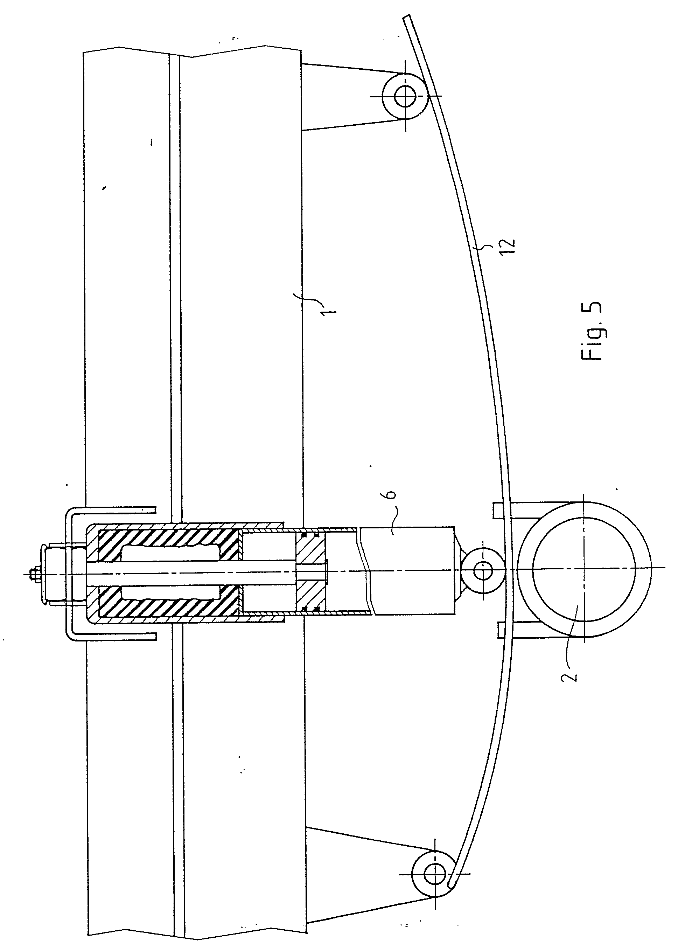

Fig. 5 zeigt die alleinige Anordnung einer Feder-Stoßdämpfer-Einheit 6 zwischen dem Fahrzeugrahmen 1 und einer die Achse 2 tragenden Blattfeder 12.

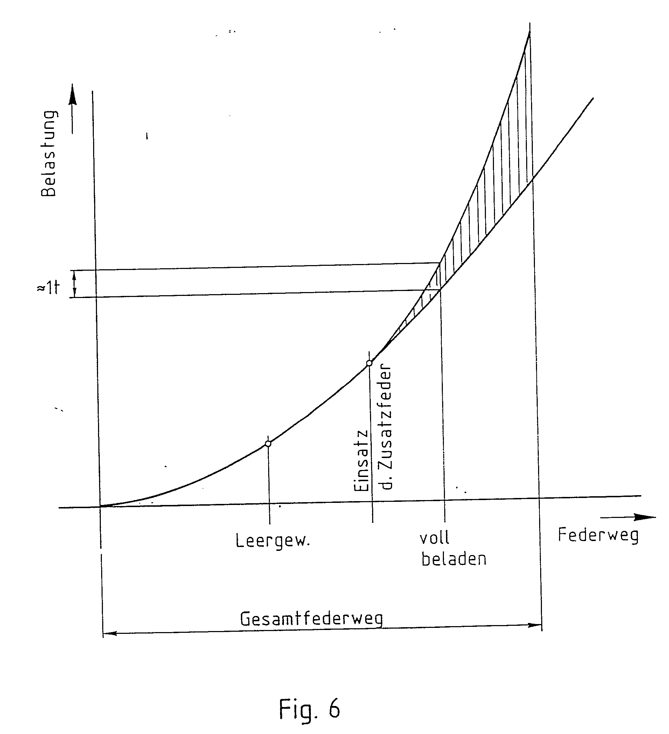

Fig. 6 zeigt die Federkennlinie des erfinderischen Systems, aus der der Zuschaltpunkt der Zusatzfeder 4, die in der Feder-Stoßdämpfer-Einheit 6 integriert ist, zu erkennen ist, wobei unter Vollbeladung höhere Achslasten aufgenommen werden können und andererseits im unteren Bereich die Federkennlinie, z.B. bei Leergewicht, unverändert bleibt. Über die in den Ausführungsbeispielen gezeigten Konstellationen sind auch noch andere Zuordnungen von Federn und Feder-Stoßdämpfer-Einheiten denkbar.

## Ansprüche

1. Achsanlenkung mit auf eine Achse einwirkenden Federn und Stoßdämpfern, die zwischen dem Fahrzeugrahmen und einer Achse von Nutzfahrzeugen angeordnet sind, dadurch gekennzeichnet, daß eine Feder (4) und ein Stoßdämpfer (5) entlang einer gemeinsamen Längsachse (7) in einem gemeinsamen Gehäuse (8), eine Feder-Stoßdämpfer-Einheit (6) bildend, angeordnet sind und diese Feder-Stoßdämpfer-Einheit (6) allein oder in Kombination mit weiteren Federn oder Stoßdämpfern zur Abstützung der Achse (2) am Fahrzeugrahmen (1) vorgesehen ist.

2. Achsanlenkung nach Anspruch 1, dadurch gekennzeichnet, daß die Feder (4) und der Stoßdämpfer (5) entlang einer gemeinsamen Längsachse (7) hintereinander geschaltet angeordnet sind.

3. Achsanlenkung nach Anspruch 1, dadurch gekennzeichnet, daß die Feder (4) und der Stoßdämpfer (5) entlang einer gemeinsamen Längsachse (7) im wesentlichen ineinander verschachtelt angeordnet sind.

4. Achsanlenkung nach den Ansprüchen 1 bis 3, dadurch gekennzeichnet, daß die Feder (4) in der Feder-Stoßdämpfer-Einheit (6) aus zelligem Polyurethanelastomer gebildet ist.

5. Achsanlenkung nach den Ansprüchen 1 bis 3, dadurch gekennzeichnet, daß die Feder (4) in der Feder-Stoßdämpfer-Einheit (6) als Schraubenfeder ausgelegt ist.

Fig. 1

Fig. 2

1.2540.b

Fig.3

1.2540.c

Fig. 4

1.2540,d

Fig. 5

Fig. 6

1.2540.f.